# DEMANDE DE BREVET EUROPEEN

(11) **EP 2 497 960 A1**
(43) Date de publication de la demande: **12.09.2012**
(21) Numéro de dépôt: 12157096.4
(22) Date de dépôt: 27.02.2012
(51) Int. Cl.: F16B 19/06

(54) **Rivet autoperforant et ensemble ainsi riveté**

(30) Priorité: 09.03.2011 FR 1151925
(71) Demandeur: SEB SA, 69130 Ecully (FR)
(72) Inventeur: Perreal, Sylvain, 74150 Rumilly (FR)
(74) Mandataire: Novagraaf Technologies

(57) **Abrégé**

Est concerné un rivet auto-perforant en acier inoxydable permettant une fixation dans une paroi en acier inoxydable. Le rivet (1) comprend une extrémité (3) adaptée à perforer la paroi, une collerette (5) et un fût (7) en forme de cylindre droit, y compris à l'extrémité (3), laquelle présente un bord périphérique fermé sur lui-même, à angle(s) vif(s), qui entoure une cavité (4) ouverte. Le fût (7) est plein sur l'essentiel au moins de la longueur entre l'extrémité (3) et la collerette (5).

## Description

La présente invention concerne un rivet auto-perforant en acier inoxydable.

Le brevet EP 1 229 254 divulgue un tel rivet permettant une fixation dans une paroi en acier. Ce rivet comprend une extrémité adaptée à perforer la paroi, une collerette présentant une surface adaptée à recevoir une force extérieure pour permettre la perforation, et un fût qui s'étend entre l'extrémité et la collerette et présente une paroi périphérique extérieure s'étendant suivant un axe, localement en forme de cylindre droit, en particulier à l'extrémité, laquelle présente un bord périphérique fermé sur lui-même qui entoure une cavité ouverte, le fût présentant une longueur suivant ledit axe, entre l'extrémité et la collerette.

Le rivet de EP 1 229 254 permet de joindre des tôles d'acier à un arbre solide. Il est destiné à être inséré à travers un trou formé dans une première feuille. Le rivet comprend une cavité de forme conique. L'extrémité du rivet présente un rebord plat. Lors de l'utilisation, en périphérie et vers son extrémité ouverte, la cavité est déformée vers l'extérieur par une seconde feuille.

Quant au rivet de EP 1 387 093, son fût 17 présente, suivant l'axe du rivet et entre l'extrémité 24 et la collerette 15, une longueur L2 où le fût n'est pas plein sur l'essentiel au moins de cette longueur : la cavité 16 le creuse profondément.

Dans le domaine des articles culinaires, on en connaît à calotte en aluminium (tels poêles, casseroles, faitouts....) qui présentent des équipements (en particulier des poignées) fixés par rivets acier auto perforants à la calotte.

Cependant, avec ces rivets, en particulier sur des articles à calotte en acier, une bavure de métal de la calotte remonte le long du rivet au moment de la pénétration de la calotte par le rivet. Cette remontée d'acier génère une bavure apparente (inesthétique) et dangereuse (coupure) pour l'utilisateur.

Ainsi, les articles culinaires en acier inoxydable sont-ils typiquement pré-percés (habituellement par poinçonnage) pour pouvoir fixer à eux un équipement, par rivetage.

Parmi les buts ici visés, on peut donc noter, individuellement ou en combinaison :
- de découper une calotte (ou partie d'article culinaire) en acier (en particulier inoxydable), sans générer de bavure lorsqu'un équipement y est riveté,
- d'assurer une étanchéité une fois le rivet en place,
- d'assurer le maintien stable et fiable de l'équipement sur la pièce qui le reçoit,
- d'assurer un gain de temps et une diminution des coûts de fabrication, sans altérer la qualité du produit fini.

Une solution proposée consiste en ce que le rivet du type de celui présenté au deuxième paragraphe du présent descriptif soit tel:
- que le bord fermé sur lui-même de l'extrémité et qui y entoure la cavité ouverte soit (sensiblement) à angle(s) vif(s),
- et que le fût soit plein sur l'essentiel au moins de la longueur (L) qu'il présente donc suivant ledit axe, entre l'extrémité et la collerette.

La prévision de caractéristiques complémentaires est conseillée ; il s'agit notamment de ce qui suit, considéré individuellement ou en combinaison, au moins partielle :
- le bord périphérique fermé sur lui-même présente au moins deux pointes éloignées l'une de l'autre (le long de ce bord),
- ces deux pointes sont situées à l'opposé l'une de l'autre le long dudit bord périphérique.
- la surface de la collerette adaptée à recevoir la force extérieure pour permettre la perforation est non percée et, transversalement à l'axe précité, d'une étendue supérieure au diamètre du cylindre droit du fût,
- la cavité du fût présente au moins une paroi courbe concave qui s'étend jusqu'à ladite extrémité de ce fût,
- la paroi courbe appartient à une portion de sphère,
- la portion de sphère est inférieure à une demi-sphère,
- la cavité du fût présente une unique surface incurvée concave, autour dudit axe,
- la paroi périphérique extérieure cylindrique du fût est de section constante, y compris à l'endroit de la liaison entre cette paroi et la collerette,
- ladite longueur (L) est plus de trois fois supérieure au diamètre extérieur du fût,
- axialement la cavité présente une profondeur maximum comprise entre 25% et 40% du diamètre extérieur du fût, à l'extrémité.

Est également concerné :
- un ensemble comprenant :
   * le rivet présentant tout ou partie des caractéristiques ci-avant,
   * une calotte d'article culinaire, en acier inoxydable au moins à l'endroit du rivetage et qui est non pré-percée à cet endroit pour recevoir le rivet,
   * et une poignée pré-percée pour laisser passer le rivet et qui est à fixer à la calotte audit endroit, par le rivet,
- et/ou un ensemble, riveté par le rivet présentant tout ou partie des caractéristiques ci-avant, et comprenant une calotte d'article culinaire qui présente une surface extérieure convexe, est en acier inoxydable au moins à l'endroit du rivetage et est percée à cet endroit par le rivet dont la collerette est plaquée contre cette calotte, à l'extérieur de la surface extérieure de celle-ci, et dont le fût traverse un perçage de la (ou d'une) poignée de diamètre supérieur à celui dudit fût.

Avec ces dernières caractéristiques, il sera possible de supprimer les bavures et d'ajuster le diamètre du rivet avec la calotte et ainsi assurer un rivetage esthétique, étanche et robuste tout en supprimant une opération (pré-perçage).

D'autres particularités et avantages apparaîtront dans la description du mode de réalisation donné à titre d'exemple non limitatif et illustré aux dessins où :
- les figures 1, 2, 3 représentent un rivet utilisable, respectivement en vue de côté, en coupe médiane et en perspective,
- la figure 4 représente un article culinaire dont la poignée est rivetée à la calotte par un rivet conforme à l'un de ceux-ci-avant,
- la figure 5 représente en coupe le rivet de la figure 4 en place à travers la calotte et la partie de fixation de la poignée,
- la figure 7 montre une possible autre finition d'extrémité du fût du rivet précédemment présenté,

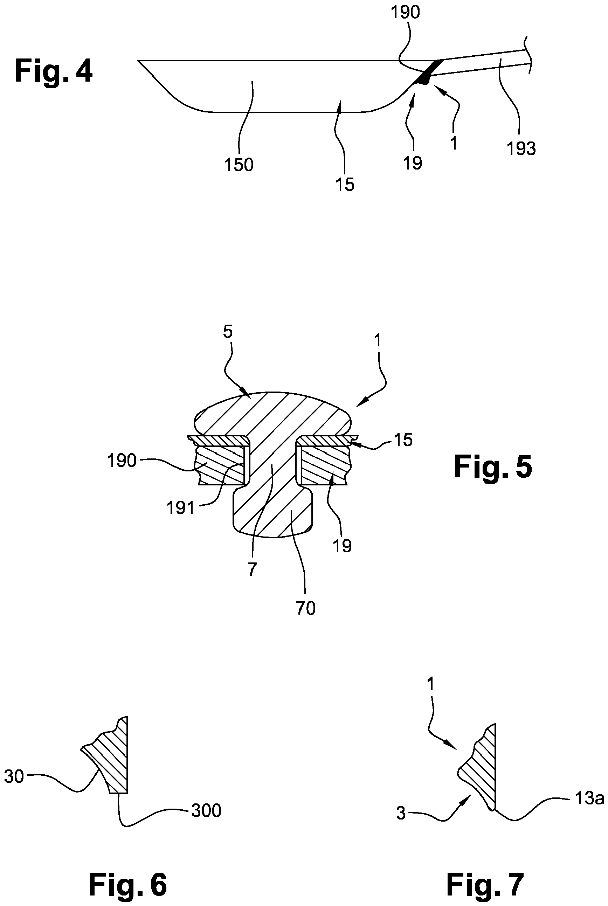

- et la figure 6 montre au contraire une solution qui ne convient pas.

Sur les figures, on voit un rivet auto-perforant 1 en acier inoxydable.

Figure 5, ce rivet permet une fixation dans une paroi en acier inoxydable 15.

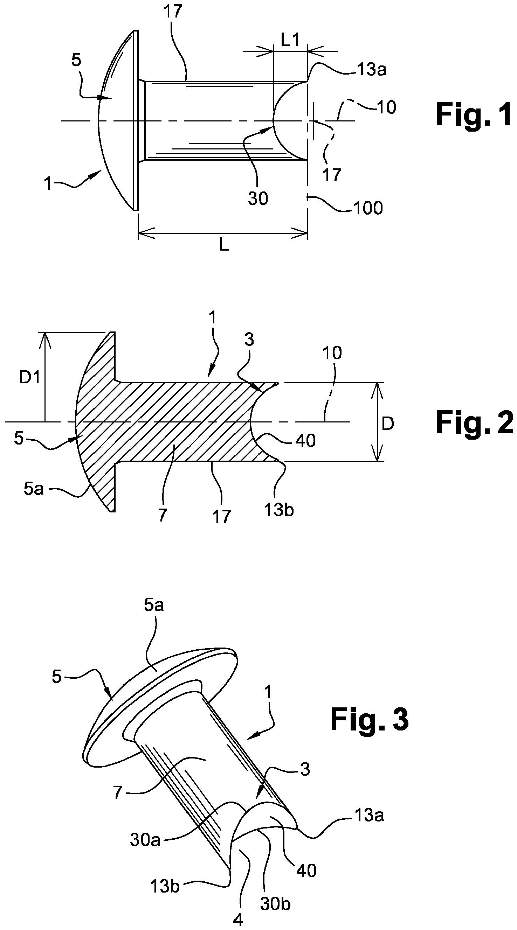

Dans son état non riveté -figures 1-3-, le rivet 1 comprend, comme illustré, une extrémité 3 adaptée à perforer la paroi où il est à fixer, une collerette 5 présentant une surface 5a adaptée à recevoir une force extérieure pour permettre la perforation, et un fût 7.

Le fût 7 s'étend entre l'extrémité 3 et la collerette 5. Il présente une paroi périphérique extérieure 17 s'étendant suivant un axe 10, en forme de cylindre droit, y compris à l'extrémité 3. L'axe 10 est un axe de révolution.

L'extrémité 3 présente un bord périphérique 30 fermé sur lui-même, à angle vif.

Ce bord entoure une cavité 4. La cavité 4 est ouverte. Son ouverture est axiale.

Si le bord périphérique 30 s'étendait dans un plan unique par exemple (voir repère 100) perpendiculaire à l'axe 10, il présenterait continument un même angle vif. Le bord périphérique 30 s'étendrait alors à un même niveau (plan unique perpendiculaire précité).

Dans la réalisation préférée illustrée, le bord périphérique fermé sur lui-même 30 présente au moins deux pointes 13a, 13b éloignées l'une de l'autre (le long de ce bord). En l'espèce, seules deux telles pointes (13a, 13b) sont illustrées et prévues.

Ceci est favorable à l'effet de perforation attendu, et ceci d'autant plus si ces pointes sont situées à l'opposé l'une de l'autre le long dudit bord périphérique. Elles sont toutes deux situées dans le plan 100 qui est donc à l'extrémité distale du fût.

Sur le pourtour, l'angle vif du bord périphérique 30 varie en inclinaison. Il est le plus pointu vers les pointes.

Les pointes sont dirigées parallèlement à l'axe 10, de manière à induire un effet coaxial de pénétration, quand le rivet est engagé suivant cet axe. Les pointes ne sont ni divergentes (en débordant au-delà du cylindre formé par la paroi périphérique 17), ni convergentes.

Le fût 7 présente une longueur L suivant l'axe 10, entre l'extrémité 3 (précisément le plan 100 où se terminent les pointes 13a, 13b) et la collerette 5 (à sa jonction avec le fût).

Ici, dans le mode de réalisation préféré, la paroi périphérique extérieure cylindrique 17 du fût 7 est de section constante (diamètre D figure 2), y compris à l'endroit de la liaison/jonction entre cette paroi et la collerette 5.

La longueur L sera favorablement plus de trois fois supérieure au diamètre extérieur D du fût 7.

Le fût 7 est plein sur l'essentiel au moins de cette longueur L.

Le fût est entièrement plein jusqu'à la cavité 4.

Favorablement, la cavité 4 présentera axialement une profondeur maximum L1 comprise entre 25% et 40% du diamètre extérieur D du fût 7, à l'extrémité 3.

Quant à la surface 5a de la collerette 5 adaptée à recevoir la force extérieure de perforation, elle est de préférence non percée et, transversalement à l'axe 10, d'une étendue (voire diamètre D1) supérieure au diamètre D du cylindre droit du fût (7).

Pour favoriser la réalisation des pointes, telles 13a, 13b, on recommande que la cavité 4 présente au moins une paroi courbe concave 40. On conseille que cette paroi concave 40 s'étende jusqu'à l'extrémité 3.

Et pour faciliter la réalisation tant de cette paroi 40 que des pointes, telles 13a, 13b, que l'atteinte des buts visés (en particulier couple performance/prix), il est recommandé que la cavité 4 présente une unique surface incurvée concave, 40, définie autour de l'axe 10.

Entre les deux pointes opposées 13a, 13b, le bord 30 est défini par deux lignes à courbures constantes, arrondies et identiques, respectivement 30a, 30b (figure 3), s'étendant en contrebas des pointes, le rivet étant supposé disposé avec son axe 10 vertical et son bord 30 en haut.

En pratique, on conseille alors que la/chaque paroi courbe 40 considérée appartienne à une portion de sphère (voir centre 17 de cette sphère figure 1).

Comme on le voit figure 3, on recommande que la portion de sphère soit inférieure à une demi-sphère, compte tenu des proportions attendues, eu égard à l'application privilégiée dans le domaine des articles culinaires.

A ce sujet, est illustré figures 4, 5 un ensemble comprenant :
- un rivet 1 reprenant tout ou partie des caractéristiques qui précèdent,
- une calotte 15 d'article culinaire, qui est donc en acier inoxydable au moins à l'endroit du rivetage et non pré-percée à cet endroit pour recevoir le rivet,
- et une poignée 19 pré-percée pour laisser passer le rivet et qui est à fixer à la calotte audit endroit, par le rivet.

Figures 4, 5, c'est la partie 190 de fixation, ici en forme de plaque, de la poignée 19 à la calotte 15 qui est pré-percée. A elle est raccordée la tige (ou anse) 193 de prise en main de cette poignée. La tige 193 pourrait être une anse ; il y aurait alors a priori deux parties 190 chacune traversée par au moins un rivet 1.

Sur ces figures, on voit encore qu'une application privilégiée de la présente solution de rivetage conseille l'utilisation d'une calotte d'article culinaire 15 en acier inoxydable et présentant une surface extérieure convexe 150, percée à l'endroit du rivetage par le rivet 1 dont la collerette 5 est ainsi plaquée contre cette calotte, à l'extérieur de la surface extérieure de celle-ci, le fût 7 du rivet traversant un perçage 191 de la poignée, ce perçage ayant un diamètre supérieur à celui du fût 7.

Figure 5, on remarque le bouterollage 70 de bonne qualité visuelle, obtenu par la déformation d'extrémité du fût 7, en fin de rivetage, par un outil servant donc à arrondir l'extrémité martelée de ce rivet.

Précédemment, il a été indiqué que le bord périphérique 30 qui entoure la cavité ouverte 4 à l'extrémité 3 était à angle(s) vif(s).

Toutefois, on doit comprendre par là que cet/ces « angle (s) vif(s) » peu(ven)t être émoussé(s), c'est-à-dire arrondi(s) comme figure 7, par exemple pour éviter de se couper. Par contre, un bord périphérique 30 bordé extérieurement par un rebord 300 plat comme figure 6 ne convient pas (voir pour autre exemple inapproprié dans le cadre de la présente invention la solution de la figure 5 de EP 1 229 254 qui ne convient donc pas ici : extrémité pas assez perforante).

## Revendications

1. Rivet auto-perforant en acier inoxydable permettant une fixation dans une paroi en acier inoxydable, le rivet (1) comprenant une extrémité (3) adaptée à perforer la paroi, une collerette (5) présentant une surface adaptée à recevoir une force extérieure pour permettre la perforation, et un fût (7) qui s'étend entre l'extrémité (3) et la collerette (5) et présente une paroi périphérique extérieure (17) s'étendant suivant un axe (10), en forme de cylindre droit, y compris à l'extrémité (3), laquelle présente un bord périphérique fermé sur lui-même, à angle(s) vif(s), qui entoure une cavité (4) ouverte, le fût (7) présentant une longueur (L) suivant ledit axe, entre l'extrémité (3) et la collerette (5), et étant plein sur l'essentiel au moins de la longueur (L).

2. Rivet selon la revendication 1, **caractérisé en ce que** le bord périphérique fermé sur lui-même présente au moins deux pointes (13a, 13b) éloignées l'une de l'autre.

3. Rivet selon la revendication 2, **caractérisé en ce que** les deux pointes (13a, 13b) sont situées à l'opposé l'une de l'autre le long dudit bord périphérique.

4. Rivet selon des revendications précédentes, **caractérisé en ce que** ladite surface (5a) de la collerette (5) adaptée à recevoir la force extérieure pour permettre la perforation est non percée et, transversalement à l'axe (10), d'une étendue supérieure au diamètre du cylindre droit du fût (7).

5. Rivet selon l'une des revendications précédentes, **caractérisé en ce que** la cavité (4) présente au moins une paroi courbe concave (40) qui s'étend jusqu'à ladite extrémité (3).

6. Rivet selon l'une des revendications précédentes, **caractérisé en ce que** la cavité présente une unique surface incurvée concave, autour dudit axe (10).

7. Rivet selon la revendication 5 ou 6, **caractérisé en ce que** la paroi courbe (40) appartient à une portion de sphère.

8. Rivet selon la revendication 7, **caractérisé en ce que** la portion de sphère est inférieure à une demi-sphère.

9. Rivet selon l'une des revendications précédentes, **caractérisé en ce que** la paroi périphérique extérieure cylindrique (17) du fût (7) est de section constante, y compris à l'endroit de la liaison entre cette paroi et la collerette (5).

10. Rivet selon l'une des revendications précédentes, **caractérisé en ce que** la longueur (L) suivant ledit axe (10) est plus de trois fois supérieure au diamètre extérieur du fût (7).

11. Rivet selon l'une des revendications précédentes, **caractérisé en ce qu'**axialement la cavité (4) présente une profondeur maximum comprise entre 25% et 40% du diamètre extérieur du fût (7), à l'extrémité (3).

12. Ensemble comprenant le rivet selon l'une des revendications précédentes, une calotte d'article culinaire (15), en acier inoxydable au moins à l'endroit du rivetage et non pré-percée à cet endroit pour recevoir le rivet, et une poignée pré-percée (19,190) pour laisser passer le rivet et qui est à fixer à la calotte audit endroit par le rivet.

13. Ensemble riveté par le rivet selon l'une des revendications 1 à 11, comprenant une calotte d'article culinaire qui présente une surface extérieure convexe, est en acier inoxydable au moins à l'endroit du rivetage et est percée à cet endroit par le rivet dont la collerette (5) est plaquée contre cette calotte, à l'extérieur de la surface extérieure de celle-ci, et dont le fût (7) traverse un perçage (191) d'une poignée (19,190), de diamètre supérieur à celui dudit fût (7)
